# EUROPEAN PATENT APPLICATION

(11) **EP 1 936 620 A1**
(43) Date of publication of application: **25.06.2008**
(21) Application number: 06126371.1
(22) Date of filing: 18.12.2006
(51) Int. Cl.: G11B 20/10

(54) **Method and arrangement for reproducing information stored on a recording medium**

(71) Applicant: Deutsche Thomson OHG, 30625 Hannover (DE)
(72) Inventor: Hölzemann, Herbert, 78048 Villingen (DE); Schmitt, Dirk, 78176 Blumberg (DE); Müller, Stefan, 78048 VS-Villingen (DE)
(74) Representative: Kurth, Dieter

(57) **Abstract**

A method and an arrangement for reproducing information stored on a recording medium by reading information read with high error rate at least twice are recommended, wherein soft decision values for currently and previously read data are compared with each other and soft decision values having the highest likelihood are selected to reduce the error rate of data used for reproducing the information stored on the recording medium.

## Description

### FIELD OF THE INVENTION

The present invention relates to a method and arrangement for reproducing information stored on a recording medium like an optical or magnetic disc to improve data detection performance or so-called playability of the recording medium, which contains information as for example audio, video or computer data by using soft decisions.

### BACKGROUND OF THE INVENTION

Recording media as e.g. optical discs, magneto- optic discs, read-only types, write-once recordable types, rewriteable types and hard disks are well known. Everyday handling damage, such as dust, fingerprints, and tiny scratches, affects the reproduction of recorded information and causes errors, which avoid a complete reconstruction of the recorded information. Normally channel coding algorithms should guarantee a reliable data recovery in disc or other data transmissions systems under bad conditions. Nevertheless sometimes the data cannot be properly read. A solution to solve said problem is re-reading the same data frames and trying to decode received data once again under amended channel conditions. It is already known to use a filter for eliminating low frequency components of a disturbed signal obtained from an optical disc. Cut-off frequencies of plural levels and a programmed control for retrying reading out of data from a portion of a defect of the optical disc by changing the cut-off frequency of the filter is used when the data can not be properly read out from that portion of the optical disc under the current rotational speed. The cut-off frequency of the filter is raised by one level by a switch to retry of the reading out of the data from that portion. When the data can not be still read out from that portion, the rotation speed of the optical disc is stepwise lowered by one level to retry the reading out of the data. Re-reading and re-decoding the same data frames in case of a previously decoding failure can only be done to some extent. As it is not possible or useless to request the data again and again the decoding will be aborted for that frame and the data are labelled as not readable.

### SUMMARY OF THE INVENTION

It is therefore an aspect of the present invention to improve the playability of a recording medium such that the amount of errors in the signal used for reproducing information stored on the recording medium will be reduced and reliable data recovery is improved.

This is achieved by means of the features specified in independent claims. Advantageous embodiments of the invention are disclosed in the dependent claims.

It is an aspect of the invention to improve the data recovery in a system, wherein digital data stored on a recording medium or transmitted via a transmission system can be requested again in case that the error rate of the received data exceeds a certain threshold or the reliability of received data shall be confirmed by a second reading or a second data transmission.

It is well known that an error distribution of data read again from a recording medium already therefore is different as e.g. a scanning beam meets the scanning area for a second reading in a different way or the signal noise ratio changed dependent on amended or altered environment or reading conditions. Even if the conditions have been changed for more reliable reading already received data again as e.g. by altering the cut-off frequency of a filter in the data channel, it happens very often, as e.g. due to an offset, that data which have been firstly correct detected are wrong interpreted during reading the same data again also if the transmission conditions have been improved and the overall error rate has been reduced.

Therefore it is recommended not simply to substitute data firstly read with high error rate by the data read or transferred again to improve the data recovery.

Data read from a recording medium or transferred via a data channel in digital data transmission systems being received with a likelihood value whether or not the data have been correctly received. Such likelihood values, which provide information about the reliability of a bit value, are used in so-called soft decision systems and are e.g. provided by a soft-in soft-out partial response maximum likelihood detector, in the following abbreviated SISO PRML. A SISO PRML provides a-posteriori probability information, which according to an embodiment of the invention for each bit is outputted as a log-likelihood ratio value related to a data bit of channel data applied to the SISO PRML. Log-likelihood ratio values are e.g. often coded with 6 bit representing a range from -32 to 31. The sign of the value indicates whether 0 or 1 has been detected and the absolute value represents the reliability of the decision. The higher absolute value indicates that the decision was the right one. Absolute values around zero indicate that the decision might be wrong. That means that in case of a wrong detection the absolute log-likelihood ratio value of the bit is low. Said behaviour is used to improve the data recovery of data at least read twice from a recording medium or twice transferred in a digital data transmission system. This is achieved by a method and an arrangement, wherein likelihood values, which have been at least twice received for the same data bit, are compared with each other to select the one of the likelihood values having the highest likelihood for recovering the data bit. The one of the likelihood values having the highest likelihood is in a system, wherein the sign plus or minus of the value indicates whether 0 or 1 has been detected and the absolute value represents the reliability of the decision, the likelihood value having the highest absolute value for the related data bit. However, it is also possible to use a system, wherein the likelihood whether 0 or 1 has been detected is represented by a predetermined range of likelihood values without using a sign. Result of selecting the one of the likelihood values having the highest likelihood for the same data bit received twice is a data bit recovery system providing data such that the amount of errors in the data used for reproducing information stored on the recording medium will be reduced, which means that the reliability of data recovery is improved.

Features and advantages of the present intention will become more apparent from the following detailed description of embodiments of the present invention when taken in conjunction with the accompanying drawings.

### BRIEF DESCRIPTION OF THE DRAWINGS

In the drawings:
FIG. 1 is a flowchart illustrating a method according to the invention,
FIG. 2 is a block diagram showing a data recovery system according to the invention,
FIG. 3 is a circuit diagram showing a buffer and exchange logic according to the invention and
FIG. 4 is a table illustrating work mode of method and arrangement according to the invention.

### DETAILED DESCRIPTION OF EMBODIMENTS

The invention is described exemplarily for an optical disc playback apparatus improving so-called playability or data detection performance from an optical disc. Reference signs are used with corresponding meanings through the Figures.

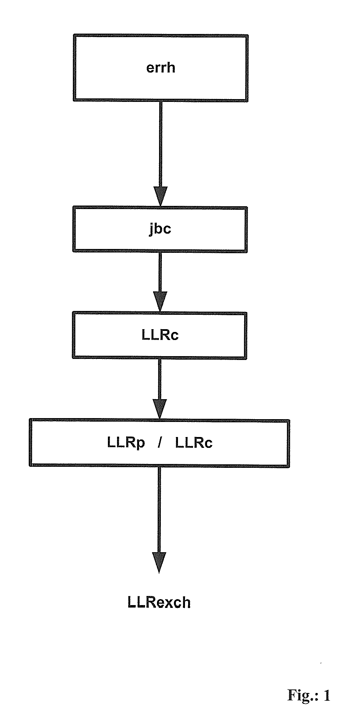

FIG. 1 illustrates a method according to the invention comprising the steps of detecting the error rate of received data and providing a signal error rate to high errh, which indicates that the error rate of received data exceeds a certain threshold. The error rate to high errh signal is used to generate a jump back command jbc for requesting the data again, for which a too high error rate has been detected. However, instead of using only the hard decision information, soft decision output values for the data read from a disc or received via a data channel are used. These soft decision values as for example log likelihood ratio values LLR provide estimation about the reliability of the received bits. They are normally generated by a soft output decoding algorithm like MAP, log-MAP, max-log-MAP, SOVA etc.. In the following description of an embodiment of the invention only log likelihood ratio values LLR are used but basically all types of soft decision output values are applicable. For each bit currently read from a recording medium or currently received via a data channel a log likelihood ratio value LLR is generated and stored in a memory, which stores a number of log likelihood ratio values LLR, which at least corresponds to a smallest number of bits for which an error rate is calculated, so that in the case wherein data already previous read or received are read or received again, previous log likelihood ratio values LLRp are still available for a comparison with currently likelihood ratio value LLRc. A previous log likelihood ratio value LLRp and a currently likelihood ratio value LLRc both related to the same bit, which has been received twice, are then compared with each other and the one of the log likelihood ratio values LLRp or LLRc representing the highest likelihood that the bit has been correct received is selected to form an exchange log likelihood ratio value LLRexch. Finally, exchange log likelihood ratio values LLRexch are used to replace bits in a bit pattern for which an error rate to high errh signal has been generated.

It is an advantage of the method that it combines the best data from different bit pattern or frames and provides due to different error distributions a new bit pattern or frame having an error rate less than the lowest error rate of one of said bit pattern or frames. That means that bit patterns or frames will be readable and can be reproduced, which a conventional decoder cannot read or decode if the error rate is too high. Furthermore, the number of trials of re-reading the same data again will be reduced by selecting the best data from a first and a second reading of data stored on a recording medium for an improved playability of the disc.

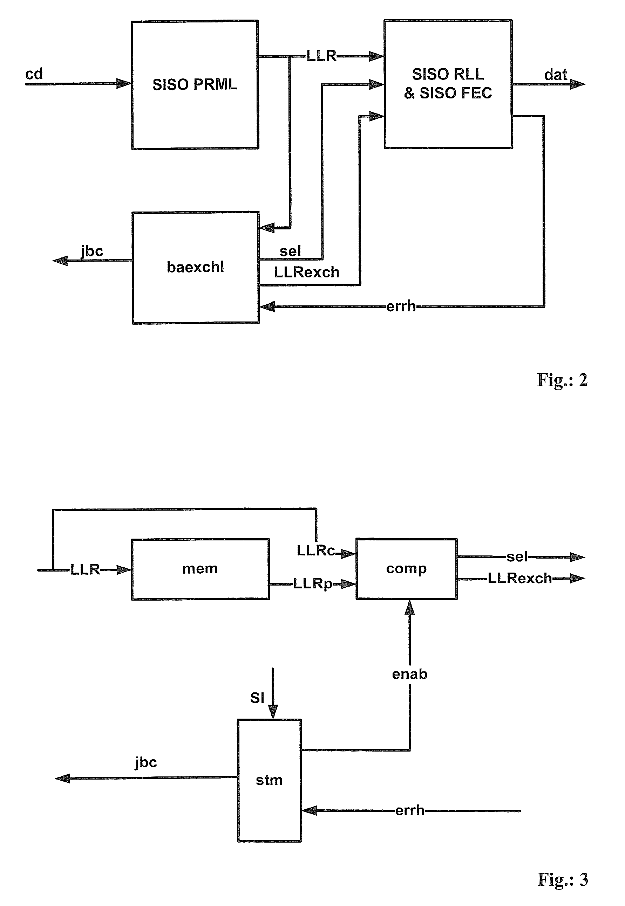

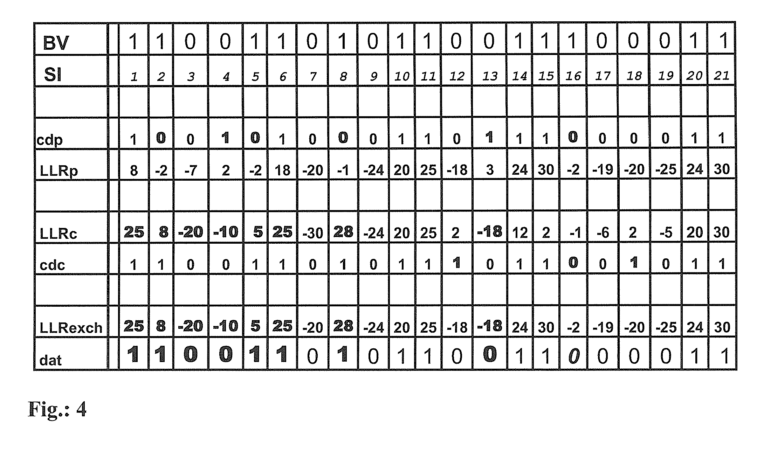

There are many factors that can degrade the quality of the information read from a recording medium, which interprets the apparatus in order to figure out where and exactly when bits or no bits are supposed to be placed in the digital signal created by the reproducing apparatus. If the disc is less reflective, there are fingerprints on the disc or the disc is dirty or scratched, then the amplitude will suffer and the zero crossings will not be as steep and well defined temporally or if some of the laser light is scattered into the disc and somehow later finds its way back to the photo detector, all this will make the signal corrupted. Especially fingerprints, dirt and small scratches lead to a high frequency signal provided by the pickup, which generate jitter and disturb the correct work of the waveform shaper or so-called data slicer providing channel data cd in a not shown front end part of a reproducing apparatus. This leads to an error rate, which is often too high so that the data can not be decoded for reproducing the information stored on the recording medium, even if channel coding algorithm should guarantee a reliable data recovery in disc or other data transmissions systems under bad conditions. Therefore, re-reading the same data frames and trying to decode received data once again under amended channel conditions is used. However, the second reading of the same data from a recording medium ore requesting the same data again very often also can not reduce the error rate in a desired manner. Therefore it is recommended to use the best data from both readings and to substitute corrupted data. This is done by an arrangement for which an exemplarily embodiment is shown in Figures 2 and 3, wherein soft decision output values for the data read from a recording medium or received via a data channel are used. Channel data cd are first processed by a soft-in soft-out partial response maximum likelihood detector SISO PRML, which provides at the output a stream of reliability values as for example log-likelihood ratio values LLR for each detected bit of the channel data cd. Log-likelihood ratio values LLR are used in the shown embodiment but basically all types of soft decision output values are applicable. Said reliability or likelihood values are applied to a soft-in soft-out run length limited decoder and forward error correction circuit SISO RLL & SISO FEC as well as a buffer and exchange logic circuit baexchl, which at least comprises a memory mem and a comparator comp. That means that the same data and log-likelihood ratio values LLR are fed into the soft-in soft-out run length limited decoder and forward error correction circuit SISO RLL & SISO FEC and a memory mem, which is shown in Fig. 3. If the error correction unit SISO FEC fails to correct a received bit pattern or data frame, it provides an error rate too high signal errh which leads to a re-reading of the same data frame from the recording medium requested by a jump back command jbc applied to the servo system of the reproducing device. These new data are then again processed by the soft-in soft-out partial response maximum likelihood detector SISO PRML and fed into the soft-in soft-out run length limited decoder and forward error correction circuit SISO RLL & SISO FEC as shown in Fig. 2. In parallel the exchange logic baexchl compares the new or current log-likelihood ratio values LLRc with previous log-likelihood ratio values LLRp previously stored in the memory mem for the same bit. Although both sets of log-likelihood ratio values LLR belong to the same sector of the recording medium, they are slightly different because the errors read from the recording medium are statistically distributed. That means it happens that some log-likelihood ratio values LLR changed from a low to a high reliability and others from high to low reliability or they remain more or less unchanged. The buffer and exchange logic baexchl selects values which changed from low to high reliability and provides exchange log-likelihood ratio values LLRexch, which by a replace command sel are transferred to the soft-in soft-out run length limited decoder and forward error correction circuit SISO RLL & SISO FEC so that bad or weak detected values are replaced by values with higher detection reliability. The improved bit pattern or data frame is then processed with higher probability of success. An embodiment for a buffer and exchange logic circuit baexchl is shown in Fig. 3, which illustrates that log-likelihood ratio values LLR are applied to a memory mem and in parallel to a first input of a comparator comp, which receives at a second input previous log-likelihood ratio values LLRp for the same channel data cd. The memory mem is formed by a shift register and keeps log-likelihood ratio values LLR of the last sector or data frame according to the manner in which data are read from the recording medium and provides the previous log-likelihood ratio values LLRp for the same channel data cd as currently read from the disc. The buffer and exchange logic circuit baexchl comprises furthermore a state machine st, which is triggered by the error rate to high signal errh from the error correction unit SISO FEC and provides a jump back command jbc for the servo to read a sector or data frame received with a high error rate again. Furthermore, the state machine st is also connected to the comparator comp and enables the comparator comp to perform a comparison between a previous log-likelihood ratio value LLRp and a current log-likelihood ratio value LLRc for a bit having the same symbol index SI. The symbol index SI, which indicates that a log-likelihood ratio value LLR is related to the same bit of channel data cd already previously read, is also provided by the soft-in soft-out partial response maximum likelihood detector SISO PRML and the comparator comp provides the replace command sel as well as exchange log-likelihood ratio values LLRexch. The exchange log-likelihood ratio values LLRexch are generated by comparing previous log-likelihood ratio values LLRp and current log-likelihood ratio values LLRc regarding to their magnitude and exchanging a log-likelihood ratio value LLR, which represents a low reliability by the one representing a higher reliability. According to a further aspect of the invention a threshold for log-likelihood ratio values LLR, which already indicate a high reliability, is implemented, so that they will not be exchanged and it is also possible to exchange only log-likelihood ratio values LLR having a different sign for the same bit read from the recording medium to reduce the number of likelihood values, which has to be exchanged e.g. to save power and to improve performance. The principle will become more apparent from the table shown in Fig. 4, wherein a first line illustrates bit values BV, which are stored on a recording medium and a second line comprises symbol index SI values in a range from 1 to 21 related to columns comprising values related to the same bit on the recording medium. For a simplified illustration purposes, 21 bit values BV shall represent a cluster of information as e.g. bits of a sector or a frame, which shall be reproduced from information stored on a recording medium. However, the recording medium has fingerprints and scratches so that channel data cdp detected by reading the recording medium have wrong values in comparison to bit values BV, which shall be read from the information stored on the recording medium. It is furthermore assumed that six wrong detected values, shown in bold in a third line in Fig. 4 and designated as previous received channel data cdp, exceed a threshold representing an error rate which can not be corrected and decoded by a following error correction circuit FEC.

Therefore, error correction circuit FEC provides an error rate to high signal errh as mentioned above. Said error rate to high signal errh is used to provide a jump back command jbc to a servo for reading the cluster of information again from the recording medium, which already previously has been read. This second reading of the recording medium provides current channel data cdc illustrated in a fourth line from the bottom in Fig. 4. Channel data cdc contain still three values wrong interpreted from the signal received from the recording medium. In a conventional device, the previous received channel data cdp will be replaced by the current channel data cdc. However, if we further assume that this error rate is till to high, that the data can not be corrected in a following error correction circuit FEC, said cluster of information will be marked as not readable and can not be reproduced by the device. Therefore, it is recommended to use soft decision values instead of hard decision information for further reducing the error rate in the data or signal used for reproducing information stored on the recording medium as it is shown in more details in Fig. 4. According to the examples shown in Fig. 4, a bit value BV equal to 1 having the index SI equal 2 is stored on the recording medium and has been previously read in a wrong manner, which is represented by previous channel data cdp 0 with a previous log-likelihood ratio value LLRp equal to minus 2. As the error rate of the cluster of bits was too high, the same information is read again from the recording medium resulting in a current channel data cdc 1 and a current log-likelihood ratio value LLRc equal 8 for the same bit value BV equal to 1 with index SI equal 2. As in that case the likelihood that the bit value BV has been read correct is higher for the current channel data cdp or current log-likelihood ratio value LLRc, said data will be selected by the comparator com as exchange log-likelihood ratio value LLRexch or data dat to reproduce information stored on the recording medium. However, if the likelihood for previous read information is higher, as e.g. for a bit value BV having the index SI equal 12, said data will be selected by the comparator com as exchange log-likelihood ratio value LLRexch or data dat to reproduce information stored on the recording medium. That means that by using soft decision values and selecting the data representing the highest likelihood that the information has been correctly detected, the best available data from previous and currently read data will be selected thus the error rate of a resulting bit stream will be reduced. In the example illustrated in Fig. 4 there is finally only one wrong detected bit related to the bit value BV with index SI equal 16, although the error rate of previous detected data and currently detected data is higher. That means that the error rate has been reduced to an amount that the following error correction unit is able to correct it and the information stored on the disc can be reproduced. Furthermore, the column with index SI equal 7 illustrates in Fig. 4 that a log-likelihood ratio value LLR above 19 not will be exchanged even if the current log-likelihood ratio value LLRc exceeds the previous log-likelihood ratio value LLRp.

The above mentioned term hard decision means that a detector firmly selects one of two levels of a received signal and soft decision means that a detector provides a multipart decision for a binary signal as e.g. whether the amplitude of a received signal is greater or less than some reference levels. Soft decision systems provide information about the reliability of a bit value and soft decision values are already available in current channel decoding architectures. That means that the additional hardware complexity for improved reproducing information stored on a recording medium is only minimal.

How many data are exchanged and how often data are re-read in an arrangement for reproducing information stored on a recording medium depends on memory and timing constraints. The recommended method and arrangement are applicable on complete ECC frames with several iterations or simply on specific data like synchronisation marks. Furthermore, the invention is realised by not shown embodiments, wherein the memory mem for providing previous log-likelihood ratio values LLRp is a memory mem already available in the soft-in soft-out partial response maximum likelihood detector SISO PRML or available in the soft-in soft-out run length limited decoder and forward error correction circuit SISO RLL & SISO FEC. Therefore, the above mentioned method and arrangement can be used and configured in numerous different ways, with the result that the field of application and the implementation of the invention are not restricted to the exemplary embodiments specified here.

## Claims

1. Method for reproducing information stored on a recording medium by reading information read with high error rate at least twice, wherein soft decision values for currently and previously read data are compared with each other and soft decision values having the highest likelihood are selected to reduce the error rate of data used for reproducing the information stored on the recording medium.

2. Method according to claim 1, wherein the soft decision values are log-likelihood ratio values (LLRc, LLRp) having a sign indicating a bit value (BV) and a value indicating a likelihood whether or not the bit value (BV) has been correctly detected.

3. Method according to claim 1, wherein selected soft decision values form exchange soft decision values to replace soft decision values having a lower likelihood for reproducing the information stored on the recording medium.

4. Method according to claim 1, wherein only soft decision values having the highest likelihood below a certain threshold or soft decision values having a different sign are selected to reduce the error rate of data used for reproducing the information stored on the recording medium.

5. Arrangement for reproducing information stored on a recording medium by reading information read with high error rate at least twice, wherein means for providing a soft decision value and a symbol index (SI) for each bit read from information stored on the recording medium and means for detecting an error rate for information read from the recording medium are provided and are connected with a buffer and exchange logic circuit (baexchl) to compare soft decision values for currently and previously read data with each other and to replace soft decision values having the lowest likelihood in the arrangement for reproducing information stored on the recording medium.

6. Arrangement according to claim 5, wherein the means for providing a soft decision value for each bit read from information stored on the recording medium is a soft-in soft-out partial response maximum likelihood detector (SISO PRML) supplied by channel data (cd) read from information stored on the recording medium.

7. Arrangement according to claim 5, wherein the means for detecting an error rate for information read from the recording medium is a soft-in soft-out run length limited decoder and forward error correction circuit (SISO RLL & SISO FEC), which is connected to the means for generating a soft decision value for each bit read from information stored on the recording medium and provides an error rate to high signal (errh) if the error rate of received data exceeds a certain threshold for replacing soft decision values having the lowest likelihood in the arrangement for reproducing information stored on the recording medium.

8. Arrangement according to claim 5, wherein the buffer and exchange logic circuit (baexchl) comprises a memory (mem), a comparator (comp) having a first input connected to the input of the memory (mem) supplied by currently read soft decision values and having a second input connected to the output of the memory (mem) for comparing with each other a currently and a previously soft decision value received for the same bit read from the recording medium and to replace soft decision values having the lowest likelihood in the arrangement for reproducing information stored on the recording medium.

9. Arrangement according to claim 8, wherein the memory (mem) is a shift register for providing previous soft decision values by storing currently provided soft decision values.

10. Arrangement according to claim 8, wherein the buffer and exchange logic circuit (baexchl) comprises furthermore a state machine (st) connected to means for providing a symbol index (SI) for each bit read from information stored on the recording medium and receiving an error rate to high signal (errh) if the error rate of received data exceeds a certain threshold for providing a jump back command (jbc) to servo means for reading again information read with high error rate from the recording medium and for applying an enable signal (enab) to the comparator (comp) for replacing soft decision values having the lowest likelihood in the arrangement for reproducing information stored on the recording medium.
